# EUROPÄISCHE PATENTSCHRIFT

(11) **EP 2 936 969 B1**
(45) Veröffentlichungstag und Bekanntmachung des Hinweises auf die Patenterteilung: **11.04.2018**
(21) Anmeldenummer: 15154403.8
(22) Anmeldetag: 10.02.2015
(51) Int. Cl.: A01F 15/08

(54) **Kombination aus einem Zugfahrzeug und einer davon gezogenen Erntemaschine**
Combination of a towing vehicle and a harvesting machine pulled by it
Combinaison d'un véhicule de traction et d'une moissonneuse tirée par celui-ci

(30) Priorität: 25.04.2014 DE 102014105820
(43) Veröffentlichungstag der Anmeldung: 28.10.2015
(73) Patentinhaber: Usines Claas France S.A.S, 57140 St. Rémy / Woippy (FR)
(72) Erfinder: Chesnier, Frédéric, 54700 Norroy les Pont á Mousson (FR); Waechter, Julien, 57640 Failly (FR)
(74) Vertreter: Budach, Steffen

(56) Entgegenhaltungen:
- EP-A1- 2 759 194
- DE-A1-102005 005 556
- US-A1- 2001 042 362
- US-A1- 2004 006 957
- US-A1- 2006 123 757
- US-A1- 2013 116 896

## Beschreibung

Die Erfindung betrifft eine Kombination aus einem Zugfahrzeug, insbesondere einem Traktor, und einer davon gezogenen landwirtschaftlichen Erntemaschine, insbesondere einer Ballenpresse oder einem Ladewagen gemäß dem Oberbegriff des Anspruchs 1.

In der Grünfutterernte werden oftmals landwirtschaftliche Erntemaschinen wie insbesondere Ballenpressen oder Ladewagen eingesetzt, die von einem Zugfahrzeug über das Feld gezogen werden. Die genannten Erntemaschinen werden dabei üblicherweise von dem Zugfahrzeug mit Antriebsleistung versorgt, um vorhandene Arbeitsaggregate der Erntemaschine (beispielsweise Pickup, Schneideinrichtung, Raffer, Presskolben), welche zur Förderung und/oder Verarbeitung des aufgenommenen Ernteguts dienen, anzutreiben. Das Zugfahrzeug, in der Regel ein Traktor, ist zu diesem Zweck mit einem heckseitigen Zapfwellenabtrieb ausgestattet, der mit einer der Erntemaschine zugeordneten Antriebswelle in Antriebsverbindung steht. Der Zapfwellenabtrieb des Traktors wird vom Antriebsmotor des Traktors angetrieben. Somit bilden der Antriebsmotor des Traktors, der Zapfwellenabtrieb und die Antriebswelle der Erntemaschine wesentliche Elemente eines Antriebsstrangs zum Antrieb der Arbeitsaggregate der Erntemaschine.

Bei der Erntefahrt einer von einem Traktor gezogenen Quaderballenpresse besteht für den Fahrer des ziehenden Traktors eine Schwierigkeit darin, einen sicheren Überblick über eine Fülle sich laufend ändernder Betriebsparameter zu haben, die während der Fahrt über das Feld für das Gelingen des Ernteprozesses eine Rolle spielen. So beeinflussen beispielsweise Faktoren wie Art, Menge, Volumen, Feuchtigkeit oder die sonstige Beschaffenheit des aufgenommen Ernteguts den Ernteprozess in hohem Maße. Weiterhin beeinflussen maschinelle Faktoren den Ernteprozess wie beispielsweise die Leistungsreserve und Drehzahl des Antriebsmotors des Traktors, die Fahrgeschwindigkeit des Traktors (und der davon gezogene Presse), die Geschwindigkeit und Belastung einzelner Arbeitsaggregate (z.B. Pickup, Schneidrotor, Raffer, Presskolben) der Presse usw. Die Faktoren stehen teils in komplexer Wechselwirkung zueinander und ändern sich zumeist laufend während der Erntefahrt. Eine Herausforderung für einen Fahrer besteht daher während der Erntefahrt unter anderem in der Wahl einer geeigneten Fahrgeschwindigkeit. Denn nur mit einer nicht zu hoch gewählten Fahrgeschwindigkeit kann die Kombination aus Traktor und Presse bei der Erntefahrt mit ausreichender Leistungsreserve des Antriebsmotors betrieben werden, um beispielsweise unter sich plötzlich verändernden Ernte- und/oder Betriebsbedingungen einen Stillstand des Antriebsstrangs und/oder Beschädigungen an Maschine oder Mensch zu vermeiden.

Bedingt durch die Abmessung und Form eines bearbeiteten Feldes befindet sich eine Traktor-Presse-Kombination während eines Feldeinsatzes nicht immer in einer wie zuvor beschriebenen Erntesituation, d.h. einem Betriebszustand, in welchem die Ballenpresse Erntegut aufnimmt, um dieses zu verarbeiten. So wird insbesondere nach dem jeweiligen Abfahren eines "Schlags" (=weitestgehend gerade oder leicht gekrümmte Fahrstrecke, in welcher ein ununterbrochener Ernteprozess stattfinden kann) das Feldende (auch: "Vorgewende") erreicht, so dass für die Traktor-Presse-Kombination ein Wendemanöver notwendig wird, um entlang eines nächsten, zumeist seitlich dazu versetzten Schlags die Ernte fortsetzen zu können. Während der Fahrt im Vorgewende findet üblicherweise keine Ernte statt.

Zur Durchführung des Wendemanövers am Feldende ist es erforderlich, dass der Fahrer des Traktors eine Vielzahl von Parametern an Traktor und Presse im Blick hat, um gleichzeitig verschiedene Maßnahmen zu treffen. Beispielsweise passt ein erfahrener Fahrer bei Erreichen des Feldendes zugleich die Fahrgeschwindigkeit an, hebt die Pickup an und lenkt den Traktor in eine Kurve. Möglicherweise wird er zusätzlich die Drehzahl des Zapfwellenabtriebs absenken, um Kraftstoff zu sparen. Beim Verlassen des Feldendes führt der Fahrer umgekehrte Maßnahmen durch, um die Ernte wiederaufzunehmen.

Aus dem Traktorbereich ist es für an den Traktor angebaute Werkzeuge, beispielsweise einen Pflug, für sich genommen bekannt, unter anderem deren Hubbewegungen während eines Wendemanövers gemäß zuvor abgespeicherter Arbeitsvorgänge zu reproduzieren. Hierzu sei auf die EP 0 903 656 B1 verwiesen. Wiederholt vom Fahrer während eines Wendemanövers auszuführende Bedienvorgänge werden damit in der Anzahl reduziert, was zu einer Entlastung des Fahrers beiträgt, denn zur Durchführung der abgespeicherten Arbeitsvorgänge ist nur noch ein Auslösen durch den Fahrer erforderlich. Für eine Übertragung dieser Technik auf eine Kombination Traktor-Presse stellt sich aber als nachteilig heraus, dass die abgespeicherten Arbeitsvorgänge in deren zeitlichem Ablauf starr sind. Da in der Grünfutterernte die Abstände zwischen benachbarten Schlägen (abhängig von jeweiligen der Lage des Schwads) und somit die Fahrtrouten im Vorgewende sehr variieren können und somit unterschiedlich viel Zeit beim Abfahren beanspruchen, ist eine Zeitsteuerung für die Grünfutterernte nur bedingt sinnvoll.

Das Dokument DE10 2005 005 556 A1 offenbart eine Kombination aus einem Zugfahrzeug und einer davon gezogenen landwirtschaftlichen Erntemaschine, die dem Oberbegriff des Anspruchs 1 entspricht.

Es ist eine Aufgabe der vorliegenden Erfindung, eine Kombination der eingangs genannten Art anzugeben, welche den Fahrer von Überwachungs- und Einstellmaßnahmen entlastet, die bei einem Wechsel zwischen Erntefahrt und Feldende-Fahrt an der Kombination vorzunehmen sind.

Die genannte Aufgabe wird gelöst durch eine Kombination mit den Merkmalen des Anspruchs 1.

Dabei kann es sich bei der Funktionseinrichtung um jedwede Einrichtung des Zugfahrzeugs und/oder der Erntemaschine handeln, die in weiterem Zusammenhang mit dem Betrieb der Kombination steht. Bei einer Funktionseinrichtung des Zugfahrzeugs kann es sich beispielsweise um dessen Antriebsmotor, Fahrregler, Zapfwellenabtrieb, Lenkung handeln, während es sich einer Funktionseinrichtung der Erntemaschine beispielsweise handeln kann um deren Pickup, Schneideinrichtung (Rotor), Raffer, Presskolben. Erfindungsgemäß sind der Kombination dabei Mittel zugeordnet, mit denen sich erkennen lässt, ob sich die Erntemaschine in einer Erntesituation (Situation, in der Erntegut aufgenommen und verarbeitet werden kann) oder in einer Feldende-Situation (Situation, in der die Erntemaschine einen Erntegutbestand verlassen hat und somit ein Fahrmanöver durchzuführen ist, um diese wieder in einen Erntegutbestand zu führen) befindet. Je nach erkannter Situation ("Ernte" oder "Feldende") sorgt die Steuereinrichtung dafür, dass die Kombination entsprechend in einer "Erntekonfiguration" oder einer "Feldende-Konfiguration" betrieben wird, indem die Steuereinrichtung der wenigstens einen Funktionseinrichtung eine geeignete Parametereinstellung (bzw. Parametereinstellungen) vorgibt.

Eine vorteilhafte Weiterbildung der Kombination sieht demnach vor, dass der Steuereinrichtung eine weitere Sensoranordnung zugeordnet ist, mit der sich wenigstens ein Zustand der Kombination, wie insbesondere eine Position der Erntemaschine und/oder des Zugfahrzeugs, ein Aufnahmezustand von Erntegut in die Erntemaschine, erfassen lässt, wobei die Steuereinrichtung aus zumindest einem dieser Zustände ableitet, ob sich die Erntemaschine in der Erntesituation oder in der Feldende-Situation befindet.

Zur Unterdrückung von Erkennungsfehlern aufgrund von zeitlich sehr kurzfristigen vorübergehenden Zustandsänderungen kann vorgesehen sein, dass die Steuereinrichtung erst bei Vorliegen eines entsprechenden Zustands über eine vorgebbare Mindestzeitdauer die zugehörige Situation erkennt. Damit könnte beispielsweise vermieden werden, dass eine kurzzeitige Unterbrechung der Erntegutaufnahme aufgrund einer Lücke im Schwad zur (in diesem Fall fehlerhaften) Erkennung einer Feldende-Situation führt.

Ein Aufnahmezustand der Erntemaschine lässt sich erfassen, indem einem Gutförder- und/oder Verarbeitungsorgan der Erntemaschine ein Lastsensor - beispielsweise Drehmomenterfassung im Antriebsstrang eines Förderorgans - zugeordnet ist, der zur Erfassung des Aufnahmezustands von Erntegut in die Erntemaschine dient.

Alternativ oder ergänzend könnte die Erntemaschine und/oder das Zugfahrzeug über einen Erntegutdetektor verfügen, mit dem sich das Vorhandensein von Erntegut unmittelbar vor der Erntemaschine bzw. dem Zugfahrzeug erfassen lässt, um daraus eine Information über einen zu erwartenden Aufnahmezustand von Erntegut in die Erntemaschine abzuleiten.

Grundsätzlich sind unterschiedliche Maßnahmen denkbar, die im Zusammenhang mit der Erkennung einer der Situationen "Ernte" oder "Feldende" von der Steuereinrichtung veranlasst werden. Vorteilhaft nimmt die Steuereinrichtung eine Parametereinstellung für eine der folgenden Größen vor: eine Fahrgeschwindigkeit der Kombination, einen Lenkwinkel des Zugfahrzeugs, eine Getriebeübersetzung des Fahrantriebs des Zugfahrzeugs, eine Drehzahl des Zapfwellenabtriebs des Zugfahrzeugs, eine Getriebeübersetzung des Zapfwellenabtriebs, eine Höhenposition der Pickup, einen Antriebszustand von Pickup, Rotor, Raffer und/oder Presskolben der Erntemaschine.

Eine besonders vorteilhafte Weiterbildung der Kombination sieht in diesem Zusammenhang vor, dass sowohl während des Betriebs in der Erntekonfiguration als auch während des Betriebs in der Feldende-Konfiguration die Steuereinrichtung eine Fahrgeschwindigkeit für die Kombination vorgibt. Durch diese Maßnahme ist der Fahrer somit zu jedem Zeitpunkt des Feldeinsatzes - sei es bei der Erntefahrt oder im Vorgewende - von der Überwachung und Steuerung der Fahrgeschwindigkeit der Kombination entlastet und kann sich somit vorteilhaft auf verbleibende wichtige Tätigkeiten konzentrieren.

Auf weiterhin vorteilhafte Weise ist denkbar, dass die Steuereinrichtung bei Erkennen der Feldende-Situation selbsttätig eine oder mehrere Maßnahmen einleitet, zu denen insbesondere zählen können: Vorgabe einer Fahrgeschwindigkeit, Anheben der Pickup, Verringern der Drehzahl des Zapfwellenabtriebs, Antriebsstopp von Gutförder- und/oder Verarbeitungsorgan, Entriegeln einer Lenkachse der Erntemaschine, um die Kombination in die Feldende-Konfiguration zu bringen.

Dabei kann vorgesehen sein, dass während des Betriebs in der Feldende-Konfiguration die Steuereinrichtung eine Fahrgeschwindigkeit für die Kombination vorgibt, die einem von einem Bediener definierbaren Wert oder einem Wert entspricht, der insbesondere mittels der Steuereinrichtung jeweils basierend auf der Charakteristik des Vorgewendes ermittelt wird. Im ersten Fall fährt die Kombination demnach am Feldende selbsttätig mit einer vom Bediener vorgegebenen Fahrgeschwindigkeit. Im zweiten Fall ermittelt/errechnet die Steuereinrichtung eigenständig eine Fahrgeschwindigkeit unter Berücksichtigung der Beschaffenheit (z. B.: Form, Größe, Gefälle) des Vorgewendes - beispielsweise aufgrund von hinterlegten Topographiedaten.

Auf weiterhin vorteilhafte Weise ist denkbar, dass die Steuereinrichtung bei Erkennen der Erntesituation selbsttätig eine oder mehrere Maßnahmen einleitet, zu denen insbesondere zählen können: Vorgabe einer Fahrgeschwindigkeit, Absenken der Pickup, Erhöhen der Drehzahl des Zapfwellenabtriebs, Anlaufen von Gutförder- und/oder Verarbeitungsorgan, Verriegeln der Lenkachse der Erntemaschine, um die Kombination in die Erntekonfiguration zu bringen.

Wie bereits angedeutet, stellt die Wahl einer geeigneten Fahrgeschwindigkeit während der Erntefahrt einer Traktor-Presse-Kombination eine Herausforderung dar. Denn die Einflussfaktoren der beiden Maschinen sowie der übrigen Erntebedingungen stehen teils in komplexer Wechselwirkung zueinander und ändern sich zumeist laufend während der Erntefahrt. Nur mit einer nicht zu hoch gewählten Fahrgeschwindigkeit kann die Kombination aus Traktor und Presse bei der Erntefahrt mit ausreichender Leistungsreserve des Antriebsmotors betrieben werden, um beispielsweise unter sich plötzlich verändernden Ernte- und/oder Betriebsbedingungen einen Stillstand des Antriebsstrangs und/oder Beschädigungen an Maschine oder Mensch zu vermeiden. In der Praxis führt dies regelmäßig dazu, dass der Fahrer aus Sicherheitsgründen eine niedrigere Fahrgeschwindigkeit wählt, als es die tatsächlichen Bedingungen zulassen würden. Das Leistungspotential der Kombination lässt sich dann nicht voll ausschöpfen. Möchte der Fahrer bei der Erntefahrt darüber hinausgehende und/oder alternative Ziele verfolgen, so braucht er dazu viel Kenntnis und Erfahrung. Eine ungeeignete Wahl der Geschwindigkeit kann jedenfalls auch weitere nachteilige Effekte haben, wie den einer verschlechterten Qualität der gepressten Ballen (schlechte Ballenform, Zerstampfen des Ernteguts).

Demnach sieht eine weiterhin vorteilhafte Weiterbildung der Kombination vor, dass während des Betriebs in der Erntekonfiguration die Steuereinrichtung eine Fahrgeschwindigkeit für die Kombination vorgibt, die von laufend erfassten Betriebsparametern sowohl der Erntemaschine als auch des Zugfahrzeugs abhängt. Dadurch ist vorteilhaft sichergestellt, dass die Fahrgeschwindigkeitswahl unter laufender Berücksichtigung von Einflussfaktoren der gesamten Kombination erfolgt. Maschinenstillstände oder -beschädigungen aufgrund von Überlastungen von Arbeitsaggregaten können so zuverlässig vermieden werden. Daneben kann aufgrund der ganzheitlichen Betrachtung von Zugfahrzeug und Erntemaschine auch für weniger erfahrene Fahrer laufend ein besonders effizienter Betrieb der Kombination - beispielsweise nahe deren Auslastungsgrenze oder nahe am Qualitätsoptimum - gewährleistet werden. Für den Fahrer stellt die Geschwindigkeitsvorgabe während der Erntefahrt eine deutliche Entlastung dar. Vorteilhaft ist dabei die Fahrgeschwindigkeitsvorgabe als Teil eines automatischen Fahrgeschwindigkeitsreglers zu verstehen, welcher die vorgegebene Fahrgeschwindigkeit laufend selbsttägig am Zugfahrzeug regelt und einstellt. In diesem Fall ist der Fahrer während der Erntefahrt vollständig von der Fahrgeschwindigkeitswahl entlastet.

Vorteilhaft kann weiterhin vorgesehen sein, dass die Fahrgeschwindigkeit während des Betriebs in der Erntekonfiguration derart gewählt ist, dass die Kombination unter Gewährleistung eines sicheren Betriebs zumindest ein vom Maschinenbediener vorgebbares Ernteziel erreicht. Mit anderen Worten berücksichtigt die Steuereinrichtung bei der Fahrtgeschwindigkeitsvorgabe dann (zumindest) ein Ernteziel, d.h. sie versucht eine Fahrgeschwindigkeit zu wählen, mit der sich - vor dem Hintergrund der jeweils aktuell vorliegenden Betriebsparameter - ein gewünschter Ernteerfolg in möglichst hohem Maße erreichen lässt. Es kann sich dabei um ein einziges Ernteziel wie beispielsweise die Erzielung eines hohen Durchsatzes oder die Erzielung einer hohen Qualität bzw. Dichte handeln.

Zum Zweck der Geschwindigkeitsregelung in der Erntekonfiguration können als Betriebsparameter der Erntemaschine zumindest eine die mechanische Belastung eines oder mehrerer Arbeitsaggregate kennzeichnende Größe, wie insbesondere deren Geschwindigkeit, Drehmoment, Arbeitsdruck und/oder dergleichen berücksichtigt werden; und/oder kann eine auf den Ernteprozess bezogene Größe wie insbesondere die Erntegutfeuchte, das Erntegutvolumen, die Pressdichte, die Paketgröße, der Durchsatz und/oder dergleichen berücksichtigt werden. Alternativ oder ergänzend können als Betriebsparameter des Zugfahrzeugs die Last dessen Antriebsmotors und/oder die aktuelle Getriebeübersetzung des Fahrantriebs des Zugfahrzeugs berücksichtigt werden. Weitere sonstige Betriebsparameter wie beispielsweise der Radschlupf, die verbleibende Kraftstoffreserve usw. sind denkbar.

Die Erfindung wird nachfolgend anhand zeichnerischer Darstellungen näher erläutert. Dabei zeigt:
- Fig. 1: eine Kombination aus einem Traktor und einer Ballenpresse in schematischer Seitenansicht,
- Fig. 2: eine Kombination aus einem Traktor und einer Ballenpresse in schematischer Draufsicht in verschiedenen Situationen eines Feldeinsatzes,
- Fig. 3: ein Funktionsschema für die Steuerung.

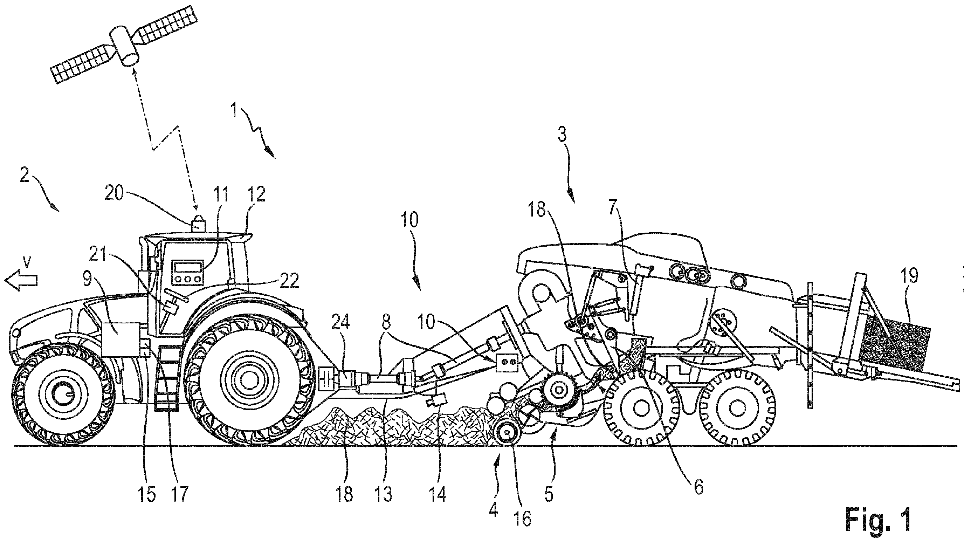

Fig. 1 zeigt in schematischer Seitenansicht eine erfindungsgemäße Kombination 1 aus einem Zugfahrzeug in Form eines Traktors 2 und einer davon gezogenen landwirtschaftlichen Erntemaschine in Form einer Quaderballenpresse 3 bei der Feldfahrt. Alternativ zu der Ballenpresse 3 könnte es sich auch um eine andere gezogene Erntemaschine handeln, die mit einem Arbeitsaggregat zur Förderung und/oder Bearbeitung von Erntegut 18 ausgestattet ist, wie beispielsweise um einen Ladewagen.

Die Ballenpresse 3 weist verschiedene Arbeitsaggregate 4, 5, 6, 7 zur Förderung und/oder Bearbeitung von Erntegut auf. Frontseitig befindet sich eine Pick-up 4, mit der in Form eines Schwads abgelegtes Erntegut 18 vom Feldboden aufgenommen, seitlich zusammengeführt und zur weiteren Bearbeitung in den Gutkanal der Ballenpresse 3 gefördert wird. Das Erntegut 18 durchläuft anschließend eine mit einem Schneidrotor ausgestattete Schneideinrichtung 5 und wird anschließend von einem periodisch Sammel- und Füllhübe ausführenden Raffer 6 vorverdichtet, um portionsweise (jeweils durch einen Füllhub des Raffers 6) einer Presskammer zugeführt zu werden, in der ein hin- und herbeweglicher Presskolben 7 das Erntegut 18 zu Ballen 19 presst. Fertige Ballen 19 verlassen heckseitig die Ballenpresse 3.

Die Arbeitsaggregate 4, 5, 6, 7 der Ballenpresse 3 werden über eine Antriebswelle 8 (hier: geknickte Gelenkwelle), die mit einem heckseitigen Zapfwellenabtrieb 24 des Traktors 2 verbunden ist, vom Traktor 2 mit Antriebsleistung versorgt. Dazu verfügt der Traktor 2 über einen Antriebsmotor 9, der mit dem Zapfwellenabtrieb 24 in Antriebsverbindung bringbar ist, so dass der Antriebsmotor 9 des Traktors 2, der Zapfwellenabtrieb 24 und die Antriebswelle 8 einen Antriebsstrang für die Ballenpresse 3 bilden. Zur Verzweigung der auf die Ballenpresse 3 übertragenen Leistung auf deren einzelnen Antriebsaggregate dienen hier nicht näher zu erläuternde Getriebe.

Der Antriebsmotor 9 des Traktors 2 ist - auf für sich übliche Weise - daneben Teil eines Antriebsstrangs des Fahrantriebs des Traktors 2, d.h. dient zum Antrieb der Räder des Traktors 2. Abhängig von der Motordrehzahl des Antriebsmotors 9 sowie einer gewählten Getriebeübersetzung zieht der Traktor 2 die Ballenpresse 3 mit einer durch einen Pfeil angedeuteten Fahrgeschwindigkeit v über das Feld, die durch einen Fahrregler 17 eingestellt wird.

Im gezeigten Ausführungsbeispiel ist der Ballenpresse 3 eine Steuereinrichtung 10 zugeordnet und über eine Datenbussystem 13, vorzugsweise ISOBUS, mit dem Traktor 2 zum Datenaustausch verbunden. Insbesondere ist dazu in der Fahrerkabine 12 des Traktors 2 eine für einen Fahrer einfach zugängliche Bedieneinheit 11 angeordnet, die über das Datenbussystem 13 mit der Steuereinrichtung 10 kommunizieren kann. Die Bedieneinheit 11 verfügt neben Bedienelementen auch über eine Anzeige, beispielsweise zur Wiedergabe von Betriebsparametern. Über das Datenbussystem 13 ist die Steuereinrichtung 10 weiterhin mit einem Fahrregler 17 des Traktors 2 verbunden und kann so auf diesen Einfluss nehmen. Der Fahrreger 17 kann durch Ansteuerung des Antriebsmotors 9 und ein (nicht gezeigte) Fahrgetriebe die Fahrgeschwindigkeit v beeinflussen. Mittels der Signalverbindung zwischen Steuereinrichtung 10 und Fahrregler 17 kann die Steuereinrichtung 10 der Erntemaschine 3 dem Traktor 2 eine Fahrgeschwindigkeit v vorgeben.

Dem Antriebsmotor 9 des Traktors 2 ist weiterhin ein Lastsensor 15 zugeordnet. Mit diesem lässt sich der aktuelle Lastzustand (beispielsweise anliegendes Drehmoment) der Antriebsmotors 9 erfassen. Der Traktor 2 verfügt weiterhin über eine Lenkeinrichtung mit in der Fahrerkabine angeordnetem Lenkrad 22. Ein mit dem Lenkrad 22 eingestellter Lenkwinkel z₁ wird über einen Lenkwinkelsensor 21 erfasst. Am Dach der Fahrerkabine 12 ist weiterhin ein satellitengestützter Positionssensor 20 angeordnet. Mit diesem lässt sich die Position z₂ des Traktors 2, bzw. unter Berücksichtigung einer Verschiebung (bei bekanntem Abstand zwischen Traktor 2 und Ballenpresse 3 sowie einer bekannten Fahrtrichtung) gegenüber dem Traktor 2 auch die Position der Ballenpresse 3, errechnen.

Wie bereits erläutert, weist die Ballenpresse 3 verschiedene Förder- und/oder Arbeitsaggregaten auf. Zur Erkennung, ob die Ballenpresse 3 Erntegut 18 aufnimmt, ist diese mit zwei verschiedenen Erfassungssystemen ausgestattet. Gemäß einem ersten System ist einem angetriebenen Arbeitsorgan (Pickup-Trommel, in Fig. 1 nicht näher bezeichnet) der Pickup 4 ein Lastsensor 16 zugeordnet. Aus dem Lastsignal z₃ (beispielsweise Drehmomenterfassung) des Lastsensors 16 lassen sich Rückschlüsse ziehen, ob (und ggf. in welchem Maße) die Ballenpresse 3 gerade Erntegut 18 aufnimmt oder nicht. Ein vergleichbarer Sensor könnte auch einem anderen Erntegut 18 fördernden Organ der Ballenpresse 3 angeordnet sein, um den Erntegutaufnahmezustand zu erfassen. Gemäß einem zweiten System ist der Ballenpresse 3 eine Kamera 14 zugeordnet. Diese Kamera 14 ist so unterhalb einer Deichsel der Ballenpresse 3 angeordnet und ausgerichtet, dass ein unmittelbar vor der Pickup 4 liegender Bereich optisch erfasst wird. Durch geeignete Bildauswertung des erfassten Bildes der Kamera 14 lassen sich demnach Rückschlüsse ziehen, ob (und ggf. in welchem Maße) die Ballenpresse 3 Erntegut 18 aufnehmen wird oder nicht.

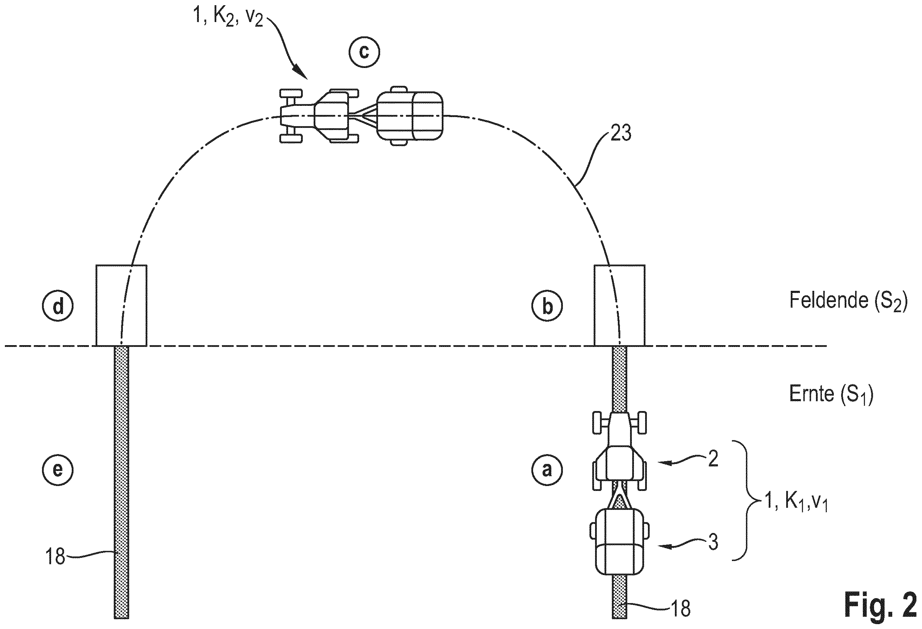

Das Zusammenwirken und die erfindungsgemäß erzielbaren Effekte der Kombination 1 werden nachfolgend anhand von Fig. 2 erläutert.

Fig. 2 zeigt in einer schematischen Draufsicht eine Kombination 1 aus einem Traktor 2 und einer davon gezogenen Ballenpresse 3 in verschiedenen Situationen eines Feldeinsatzes. Es kann sich bei der Kombination 1 gemäß Fig. 2 beispielsweise um die in Fig. 1 gezeigte und erläuterte Kombination 1 handeln.

Entsprechend der Darstellung in Fig. 2 fährt die Kombination 1 entlang einer Fahrspur 23 und erreicht dabei fünf aufeinander folgende Wegpunkte a, b, c, d, e. Die Fahrspur 23 weist eine (umgekehrte) U-Form auf und wird von einer gestrichelten Hilfslinie geschnitten. Ein Bereich unterhalb der gestrichelten Hilfslinie entspricht einer Fläche eines von der Kombination 1 zu bearbeitenden Feldes, auf dem Erntegut 18 in parallel zueinander verlaufenden Schwaden abgelegt ist. Es ist Ziel des Ernteprozesses, das so abgelegte Erntegut 18 mit der Ballenpresse 3 aufzunehmen und zu Ballen 19 (vgl. Fig. 1) zu pressen.

Ein Bereich oberhalb der gestrichelten Hilfslinie (nun wieder: Fig. 2) entspricht dem sogenannten Feldende (oder "Vorgewende") des Feldes. In diesem Bereich des Feldes ist kein Erntegut vorhanden bzw. es wurde bereits geerntet. Für die Kombination 1 ist das Vorgewende insofern von Bedeutung, als dass hier ausreichend Platz zur Verfügung steht, um die Kombination 1 - nach Erntefahrt entlang eines ersten Schwads (vorbei am Wegpunkt a) - durch Fahrt eines Bogens zu wenden, um anschließend eine Erntefahrt entlang eines weiteren Schwads (vorbei am Wegpunkt e) fortzusetzen.

Während sich der erste Wegpunkt a und der letzte Wegpunkt e der in Fig. 2 gezeigten Fahrspur 23 im Bereich einer abzuerntenden Feldfläche befinden (Erntesituation Si), liegen die Wegpunkte b bis d im Bereich des Feldendes (Feldende-Situation S₂).

Bei einem Wechsel zwischen der Erntesituation S₁ und Feldende-Situation S₂ muss üblicherweise eine Vielzahl von Parametern an Traktor und Presse angepasst werden. Zur Durchführung des in Fig. 2 gezeigten Wendemanövers am Feldende ist es demnach erforderlich, dass der Fahrer des Traktors 2 eine Vielzahl von Parametern an Traktor 2 und Presse 3 im Blick hat, um gleichzeitig verschiedene Maßnahmen zu treffen. Beispielsweise passt ein erfahrener Fahrer bei Erreichen des Feldendes zugleich die Fahrgeschwindigkeit an, hebt die Pickup an und lenkt den Traktor in eine Kurve. Möglicherweise wird er zusätzlich die Drehzahl des Zapfwellenabtriebs absenken, um Kraftstoff zu sparen. Beim Verlassen des Feldendes führt der Fahrer umgekehrte Maßnahmen durch, um die Ernte wiederaufzunehmen. All dies erfordert viel Aufmerksamkeit, Geschick und Erfahrung.

Zur Entlastung des Fahrers und zur Verbesserung der Maschinenabstimmung zeichnet sich die erfindungsgemäße Kombination aus durch Mittel 10, 14, 16, 20, 21 zur Erkennung, ob sich die Erntemaschine 3 in einer Erntesituation S₁ oder in einer Feldende-Situation S₂ befindet, und eine Steuereinrichtung 10, die betreibbar ist, für wenigstens eine Funktionseinrichtung 4, 5, 6, 7, 9, 17, 24 der Kombination 1 zumindest eine Parametereinstellung vorzugeben, mit der die Kombination 1 abhängig von der erkannten Situation S₁, S₂ in einer Erntekonfiguration K₁ oder in einer Feldende-Konfiguration K₂ betreibbar ist.

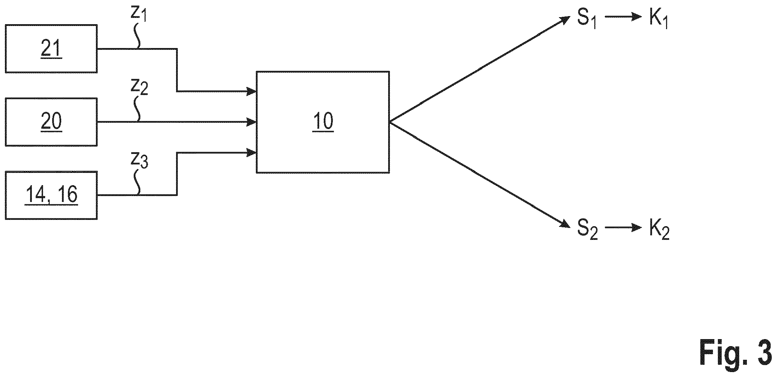

Bei der in Fig. 2 gezeigten Kombination 1, welche die Merkmale der in Fig. 1 erläuterten Kombination 1 aufweist, erfolgt die Erkennung von Erntesituation S₁ oder Feldende-Situation S₂ wie nachfolgend anhand von Fig. 3 erläutert:
Fig. 3 zeigt beispielhaft ein Funktionsschema einer an der Kombination 1 zum Einsatz kommenden Steuereinrichtung 10. Die Steuereinrichtung 10 verfügt hier über drei parallele Signaleingänge. Ein erster Eingang betrifft den Lenkwinkelsensor 21. Dieser erfasst einen Lenkwinkel z₁ des Traktors 2 und übermittelt diesen an die Steuereinrichtung 10. Ein zweiter Eingang betrifft den Positionssensor 20. Dieser erfasst die Position z₂ des Traktors 2 und übermittelt diese an die Steuereinrichtung 10. Ein dritter Eingang betrifft eine Sensoranordnung zur Ermittlung des Erntegutaufnahmezustands. Diese umfasst zwei Sensortypen: die Kamera 14 und den an der Pickup 4 angeordneten Lastsensor 16. Die Sensoren erfassen den Erntegutaufnahmezustand z₃ der Erntemaschine 3 und übermitteln diesen an die Steuereinrichtung 10. Somit erhält die Steuereinrichtung 10 zumindest drei Eingangssignale zi, z₂, z₃ über den Zustand der Kombination 1 (weitere Signaleingänge sind denkbar).

Die Steuereinrichtung 10 kann aus zumindest dem Lenkwinkel z₁ ableiten, ob sich die Erntemaschine 3 in der Erntesituation S₁ oder in der Feldende-Situation S₂ befindet. Beispielsweise kann das Vorliegen der Feldende-Situation S₂ daran erkannt werden, dass über eine gewisse Mindestzeitdauer ein gewisser Lenkwinkel z₁ überschritten wird oder dass über eine gewisse Mindestzeitdauer kein Erntegut 18 aufgenommen wird (Erntegutaufnahmezustand z₃). Ergänzend kann anhand der Position z₂ erkannt werden, dass der Traktor 2 das Feldende S₂ erreicht hat. In umgekehrter Weise kann das Vorliegen der Erntesituation S₁ daran erkannt werden dass über eine gewisse Mindestzeitdauer ein gewisser Lenkwinkel z₁ nicht mehr überschritten wird oder dass über eine gewisse Mindestzeitdauer wieder Erntegut 18 aufgenommen wird (Erntegutaufnahmezustand z₃). Ergänzend kann anhand der Position z₂ erkannt werden, dass der Traktor 2 aus dem Feldende S₂ hinausfährt und die Ernte wiederaufnehmen kann (S₁). Es ist selbstverständlich denkbar, dass die Kombination 1 nur mit einer oder zweien der genannten Erfassungssysteme ausgestattet ist. Alternativ kann auch ein anderes Erfassungssystem zum Einsatz kommen, das dem gewünschten Zweck dient.

Sobald die Steuereinrichtung 10 einen Wechsel in eine andere Situation S₁, S₂ erkannt hat (vgl. Fig. 3), leitet die Steuereinrichtung 10 einen Wechsel in eine geeignete Konfiguration K₁ oder K₂ ein. Dies erfolgt, indem die Steuereinrichtung 10 der Kombination 1 eine oder insbesondere mehrere Parametereinstellungen vorgibt, die insbesondere eine der folgenden Größen betreffen: eine Fahrgeschwindigkeit vi oder v₂ der Kombination 1, einen Lenkwinkel z₁ des Zugfahrzeugs 2, eine Getriebeübersetzung des Fahrantriebs des Zugfahrzeugs 2, eine Drehzahl des Zapfwellenabtriebs 24 des Zugfahrzeugs 2, eine Getriebeübersetzung des Zapfwellenabtriebs 24, eine Höhenposition der Pickup 4, einen Antriebszustand von Pickup 4, Rotor 5, Raffer 6 und/oder Presskolben 7 der Erntemaschine 3. Im Ergebnis führt dies dazu, dass die Kombination während der Ernte S₁ in einer Konfiguration K₁ und am Feldende S₂ in einer Konfiguration K₂ betrieben wird. Dabei besteht für den Fahrer der Vorteil, dass der Wechsel zwischen diesen Konfigurationen K₁, K₂ selbsttätig erfolgt. Der ist Fahrer somit von der Vornahme einer Vielzahl von Verstellungsmaßnahmen entlastet. Weiterhin erfolgt der Wechsel zwischen den Konfigurationen K₁, K₂ ereignisgesteuert, d.h. nicht zeitlich starr, sondern erst dann, wenn tatsächlich eine veränderte Erntesituation S₁, S₂ erfasst wird.

Wie bereits angedeutet, sind unterschiedliche Parametereinstellungen vorstellbar, die mit einem Wechsel zwischen den Konfigurationen K₁, K₂ berücksichtigt werden. Eine besonders zweckmäßige Anwendung der Erfindung besteht darin, dass die Steuereinrichtung 10 sowohl während des Betriebs in der Erntekonfiguration K₁ als auch während des Betriebs in der Feldende-Konfiguration K₂ eine Fahrgeschwindigkeit v₁, v₂ für die Kombination 1 vorgibt. Somit ist der Fahrer vollkommen von der Überwachung und Einstellung der Fahrgeschwindigkeit entlastet.

Eine darüber hinaus vorteilhafte Anwendung sieht vor, dass die Steuereinrichtung 10 bei Erkennen der Feldende-Situation S₂ selbsttätig eine oder mehrere Maßnahmen einleitet, zu denen insbesondere zählen können: Vorgabe der Fahrgeschwindigkeit v₂, Anheben der Pickup 4, Verringern der Drehzahl des Zapfwellenabtriebs 24, Antriebsstopp von Gutförder- und/oder Verarbeitungsorgan 4, 5, 6, 7, Entriegeln einer Lenkachse der Erntemaschine 3, um die Kombination 1 in die Feldende-Konfiguration K₂ zu bringen.

Insbesondere - wie in Fig. 2 angedeutet - kann vorgesehen sein, dass während des Betriebs in der Feldende-Konfiguration K₂ die Steuereinrichtung 10 eine Fahrgeschwindigkeit v₂ für die Kombination 1 vorgibt, die einem von einem Bediener definierbaren Wert oder einem Wert entspricht, der insbesondere mittels der Steuereinrichtung 10 jeweils basierend auf der Charakteristik des Vorgewendes ermittelt wird.

Bei Erkennen der Erntesituation S₁ kann insbesondere vorgesehen sein, dass die Steuereinrichtung 10 selbsttätig eine oder mehrere Maßnahmen einleitet, zu denen insbesondere zählen können: Vorgabe einer Fahrgeschwindigkeit v₁, Absenken der Pickup 4, Erhöhen der Drehzahl des Zapfwellenabtriebs 24, Anlaufen von Gutförder- und/oder Verarbeitungsorgan 4, 5, 6, 7, Verriegeln der Lenkachse der Erntemaschine 3, um die Kombination 1 in die Erntekonfiguration K₁ zu bringen.

Eine weiterhin vorteilhafte Ausgestaltung der Erfindung sieht vor, dass die Steuereinrichtung 10 während des Betriebs in der Erntekonfiguration K₁ eine Fahrgeschwindigkeit vi für die Kombination 1 vorgibt, die von laufend erfassten Betriebsparametern der Erntemaschine 3 und des Zugfahrzeugs 2 abhängt.

Mit anderen Worten erfolgt in der Erntekonfiguration K₁ die Geschwindigkeitsvorgabe (durch "v₁") basierend auf laufend erfassten Betriebsparametern sowohl des Traktors 2 als auch der Ballenpresse 3 und wird laufend an die jeweiligen Ernte- und Maschinenbedingungen angepasst. Zu diesem Zweck können der Steuereinrichtung 10 weitere Signaleingänge (nicht im Einzelnen gezeigt) zugeordnet sein, wobei zumindest die vom Traktor 2 eingehenden Signale vorzugsweise über einen Datenbus 13 der Steuereinrichtung 10 zugeführt werden. Damit erübrigen sich über das Buskabel hinausgehende Kabelverbindungen zwischen Traktor 2 und Ballenpresse 3. Der Traktor 2 ist beispielsweise mit einem Lastsensor 15 des Antriebsmotors 9 ausgestattet. Die so erfasste aktuelle Motorlast wird über den Datenbus 13 an die Steuereinrichtung 10 übermittelt. Vorteilhaft könnten auch die aktuelle Fahrgeschwindigkeit und/oder die aktuelle Getriebeübersetzung des Fahrantriebs des Traktors 2 oder sonstige Motor-/Getriebebetriebsdaten an die Steuereinrichtung 10 übermittelt werden. Es ist einfach denkbar, dass die Steuereinrichtung 10 über den Datenbus 13 weitere Betriebsparameter des Traktors 2 empfängt, die für die Vorgabe einer Fahrgeschwindigkeit vi eine Rolle spielen. Die Ballenpresse 3 ist vorteilhaft mit einer Vielzahl von Sensoren ausgestattet, welche unterschiedliche Betriebsparameter der Ballenpresse 3 erfassen. Dies sind Sensoren, wie beispielsweise der Lastsensor 16, zur Erfassung des Belastungszustands einzelner Arbeitsaggregate wie insbesondere der Pickup 4, der Schneideinrichtung 5, des Raffers 6, des Presskolbens 7. Durch Erfassung der Geschwindigkeit, des Antriebsmoments oder des Arbeitsdrucks einzelner Maschinenkomponenten (Pickup-Trommel, Schneidrotor, Rafferkurbel) erfassen die Sensoren direkt oder indirekt die Belastung zugehöriger Arbeitsaggregate. Da die Steuereinrichtung 10 die Werte der erfassten Betriebsparameter laufend empfängt, kann diese nun in Abhängigkeit von den Erntebedingungen und der Leistungskapazität von Traktor 2 und Presse 3 eine Fahrgeschwindigkeit v₁ vorgeben.

Die beschriebene Kombination 1 weist verschiedene vorteilhafte Effekte auf. Zunächst wird der Komfort für den Fahrer erhöht, da der Fahrer von der gleichzeitigen Überwachung und Anpassung mehrerer Parametereinstellungen entlastet wird. Weiterhin lässt sich durch die selbsttägige Parameteranpassung die Betriebszeit im Vorgewende reduzieren, wodurch sich die Maschinenauslastung insgesamt erhöht. Die Durchführung vorgeschlagener Maßnahmen im Vorgewende wie die Reduzierung der Zapfwellendrehzahl, das vorübergehende Anhalten von Arbeitsaggregaten (Raffer, Rotor, Pickup) tragen weiterhin zu einer Einsparung von Kraftstoff bei.

### Bezugszeichenliste

- 1: Kombination
- 2: Traktor
- 3: Ballenpresse
- 4: Pickup
- 5: Schneideinrichtung
- 6: Raffer
- 7: Presskolben
- 8: Antriebswelle
- 9: Antriebsmotor
- 10: Steuereinrichtung
- 11: Bedieneinheit
- 12: Fahrerkabine
- 13: Datenbussystem
- 14: Kamera
- 15: Lastsensor
- 16: Lastsensor
- 17: Fahrregler
- 18: Erntegut
- 19: gepresster Ballen
- 20: Positionssensor
- 21: Lenkwinkelsensor
- 22: Lenkrad
- 23: Fahrspur
- 24: Zapfwellenabtrieb
- S₁: Erntesituation
- S₂: Feldende-Situation
- v: Fahrgeschwindigkeit
- z₁: Lenkwinkel
- z₂: Positionssignal
- z₃: Erntegutaufnahmezustand
- a-e: Wegpunkte

## Patentansprüche

1. Kombination (1) aus einem Zugfahrzeug (2), insbesondere einem Traktor, und einer davon gezogenen landwirtschaftlichen Erntemaschine (3), insbesondere einer Ballenpresse oder einem Ladewagen,
wobei die Kombination (1) umfasst Mittel (10, 14, 16, 20, 21) zur Erkennung, ob sich die Erntemaschine (3) in einer Erntesituation (S₁) oder in einer Feldende-Situation (S₂) befindet, und eine Steuereinrichtung (10), die betreibbar ist, für wenigstens eine Funktionseinrichtung (4, 5, 6, 7, 9, 17, 24) der Kombination (1) zumindest eine Parametereinstellung vorzugeben, mit der die Kombination (1) abhängig von der erkannten Situation (S₁, S₂) in einer Erntekonfiguration (K₁) oder in einer Feldende-Konfiguration (K₂) betreibbar ist, **dadurch gekennzeichnet, dass** der Steuereinrichtung (10) zumindest eine Sensoranordnung (21) zugeordnet ist, mit der sich wenigstens ein Zustand (z) der Kombination (1), ein Lenkwinkel (z1) des Zugfahrzeugs (2), erfassen lässt, wobei die Steuereinrichtung (10) aus zumindest diesem einen Zustand (z1) ableitet, ob sich die Erntemaschine (3) in der Erntesituation (S1) oder in der Feldende-Situation (S2) befindet.

2. Kombination nach Anspruch 1, **dadurch gekennzeichnet, dass** die Erkennung, ob sich die Erntemaschine (3) in einer Erntesituation (S₁) oder in einer Feldende-Situation (S₂) befindet, in Abhängigkeit eines oder mehrerer Betriebskriterien der Kombination (1) erfolgt.

3. Kombination nach Anspruch 1 oder 2, **dadurch gekennzeichnet, dass** der Steuereinrichtung (10) zumindest eine weitere Sensoranordnung (20, 14, 16) zugeordnet ist, mit der sich wenigstens ein Zustand (z) der Kombination (1), wie insbesondere eine Position (z₂) der Erntemaschine (3) und/oder des Zugfahrzeugs (2), ein Aufnahmezustand (z₃) von Erntegut in die Erntemaschine (3), erfassen lässt, wobei die Steuereinrichtung (10) aus zumindest einem dieser Zustände (z₂, z₃) ableitet, ob sich die Erntemaschine (3) in der Erntesituation (S₁) oder in der Feldende-Situation (S₂) befindet.

4. Kombination nach Anspruch 3, **dadurch gekennzeichnet, dass** die Steuereinrichtung (10) erst bei Vorliegen eines entsprechenden Zustands über eine vorgebbare Mindestzeitdauer die zugehörige Situation (S₁, S₂) erkennt.

5. Kombination nach Anspruch 3 oder 4, **dadurch gekennzeichnet, dass** einem Gutförder- und/oder Verarbeitungsorgan (4, 5, 6) der Erntemaschine (3) ein Lastsensor (16) zugeordnet ist, der zur Erfassung des Aufnahmezustands (z₃) von Erntegut (18) in die Erntemaschine (3) dient.

6. Kombination nach einem der Ansprüche 3 bis 5, **dadurch gekennzeichnet, dass** die Erntemaschine (3) und/oder das Zugfahrzeug über einen Erntegutdetektor (14) verfügt, mit dem sich das Vorhandensein von Erntegut (18) unmittelbar vor der Erntemaschine (3) bzw. dem Zugfahrzeug erfassen lässt, um daraus eine Information über einen zu erwartenden Aufnahmezustand (z₃) von Erntegut (18) in die Erntemaschine (3) abzuleiten.

7. Kombination nach einem der vorigen Ansprüche, **dadurch gekennzeichnet, dass** die Parametereinstellung eine Einstellung einer der folgenden Größen betrifft: eine Fahrgeschwindigkeit (v) der Kombination (1), einen Lenkwinkel (z₁) des Zugfahrzeugs (2), eine Getriebeübersetzung des Fahrantriebs des Zugfahrzeugs (2), eine Drehzahl des Zapfwellenabtriebs (24) des Zugfahrzeugs (2), eine Getriebeübersetzung des Zapfwellenabtriebs (24), eine Höhenposition der Pickup (4), einen Antriebszustand von Pickup (4), Rotor (5), Raffer (6) und/oder Presskolben (7) der Erntemaschine (3).

8. Kombination nach einem der vorigen Ansprüche, **dadurch gekennzeichnet, dass** sowohl während des Betriebs in der Erntekonfiguration (K₁) als auch während des Betriebs in der Feldende-Konfiguration (K₂) die Steuereinrichtung (10) eine Fahrgeschwindigkeit (v₁, v₂) für die Kombination (1) vorgibt.

9. Kombination nach einem der vorigen Ansprüche, **dadurch gekennzeichnet, dass** die Steuereinrichtung (10) bei Erkennen der Feldende-Situation (S₂) selbsttätig eine oder mehrere Maßnahmen einleitet, zu denen insbesondere zählen können: Vorgabe einer Fahrgeschwindigkeit (v₂), Anheben der Pickup (4), Verringern der Drehzahl des Zapfwellenabtriebs (24), Antriebsstopp von Gutförder- und/oder Verarbeitungsorgan (4, 5, 6, 7), Entriegeln einer Lenkachse der Erntemaschine (3), um die Kombination (1) in die Feldende-Konfiguration (K₂) zu bringen.

10. Kombination nach einem der vorigen Ansprüche, **dadurch gekennzeichnet, dass** während des Betriebs in der Feldende-Konfiguration (K₂) die Steuereinrichtung (10) eine Fahrgeschwindigkeit (v₂) für die Kombination (1) vorgibt, die einem von einem Bediener definierbaren Wert oder einem Wert entspricht, der insbesondere mittels der Steuereinrichtung (10) jeweils basierend auf der Charakteristik des Vorgewendes ermittelt wird.

11. Kombination nach einem der vorigen Ansprüche, **dadurch gekennzeichnet, dass** die Steuereinrichtung (10) bei Erkennen der Erntesituation (S₁) selbsttätig eine oder mehrere Maßnahmen einleitet, zu denen insbesondere zählen können: Vorgabe einer Fahrgeschwindigkeit (v₁), Absenken der Pickup (4), Erhöhen der Drehzahl des Zapfwellenabtriebs (24), Anlaufen von Gutförder- und/oder Verarbeitungsorgan (4, 5, 6, 7), Verriegeln der Lenkachse der Erntemaschine (3), um die Kombination (1) in die Erntekonfiguration (K₁) zu bringen.

12. Kombination nach einem der vorigen Ansprüche, **dadurch gekennzeichnet, dass** während des Betriebs in der Erntekonfiguration (K₁) die Steuereinrichtung (10) eine Fahrgeschwindigkeit (v₁) für die Kombination (1) vorgibt, die von laufend erfassten Betriebsparametern der Erntemaschine (3) und des Zugfahrzeugs (2) abhängt.

13. Kombination nach Anspruch 12, **dadurch gekennzeichnet, dass** die Fahrgeschwindigkeit (v₁) derart gewählt ist, dass die Kombination (1) unter Gewährleistung eines sicheren Betriebs zumindest ein vom Maschinenbediener vorgebbares Ernteziel erreicht.

14. Kombination nach Anspruch 12 oder 13, **dadurch gekennzeichnet, dass** als Betriebsparameter der Erntemaschine (3) zumindest eine die mechanische Belastung eines oder mehrerer Arbeitsaggregate (4, 5, 6, 7, 8) kennzeichnende Größe, wie insbesondere deren Geschwindigkeit, Drehmoment, Arbeitsdruck und/oder dergleichen berücksichtigt wird; und/oder dass eine auf den Ernteprozess bezogene Größe wie insbesondere die Erntegutfeuchte, das Erntegutvolumen, die Pressdichte, die Paketgröße, der Durchsatz und/oder dergleichen berücksichtigt wird.

15. Kombination nach einem der Ansprüche 12 bis 14, **dadurch gekennzeichnet, dass** als Betriebsparameter des Zugfahrzeugs (2) die Last dessen Antriebsmotors (9) und/oder die aktuelle Getriebeübersetzung des Fahrantriebs des Zugfahrzeugs (2) berücksichtigt wird.

## Claims

1. A combination (1) comprising a towing vehicle (2), in particular a tractor, and an agricultural harvester (3) towed thereby, in particular a bale press or a loading wagon,
wherein the combination (1) includes means (10, 14, 16, 20, 21) for detecting whether the harvester (3) is in a harvesting situation (S₁) or in a field-end situation (S₂), and a control device (10) operable for at least one functional device (4, 5, 6, 7, 9, 17, 24) of the combination (1) to predetermine at least one parameter setting, with which the combination (1) is operable in dependence on the detected situation (S₁, S₂) in a harvesting configuration (K₁) or in a field-end configuration (K₂), **characterised in that**
associated with the control device (10) is at least one sensor arrangement (21) with which at least one state (z) of the combination (1), a steering angle (z1) of the towing vehicle (2), can be detected, wherein the control device (10) deduces from at least said one state (z1) whether the harvester (3) is in the harvesting situation (S1) or in the field-end situation (S2).

2. A combination according to claim 1 **characterised in that** detection of whether the harvester (3) is in a harvesting situation (S₁) or in a field-end situation (S₂) is effected in dependence on one or more operating criteria of the combination (1).

3. A combination according to claim 1 or claim 2 **characterised in that** associated with the control device (10) is at least one further sensor arrangement (20, 14, 16) with which at least one state (z) of the combination (1), like in particular a position (z₂) of the harvester (3) and/or of the towing vehicle (2), a pick-up state (z3) of crop material into the harvester (3), can be detected, wherein the control device (10) deduces from at least one of said states (z₂, z₃) whether the harvester (3) is in the harvesting situation (S₁) or in the field-end situation (S₂).

4. A combination according to claim 3 **characterised in that** the control device (10) detects the associated situation (S₁, S₂) only when there is a corresponding state over a predeterminable minimum period of time.

5. A combination according to claim 3 or claim 4 **characterised in that** associated with a crop conveyor and/or processing member (4, 5, 6) of the harvester (3) is a load sensor (16) which serves to detect the pick-up state (z3) of crop material (18) into the harvester (3).

6. A combination according to one of claims 3 to 5 **characterised in that** the harvester (3) and/or the towing vehicle has a crop material detector (14) with which the presence of crop material (18) directly in front of the harvester (3) or the towing vehicle can be detected in order to derive therefrom information about a pick-up state (z₃) to be expected of crop material (18) into the harvester (3).

7. A combination according to one of the preceding claims **characterised in that** the parameter setting concerns a setting of one of the following values: a travel speed (v) of the combination (1), a steering angle (z₁) of the towing vehicle (2), a transmission ratio of the travel drive of the towing vehicle (2), a speed of rotation of the power take-off output shaft (24) of the towing vehicle (2), a transmission ratio of the power take-off output shaft (24), a height position of the pick-up (4), a drive state of the pick-up (4), the rotor (5), the feed rake (6) and/or the pressing ram (7) of the harvester (3).

8. A combination according to one of the preceding claims **characterised in that** the control device (10) predetermines a travel speed (v₁, v₂) for the combination (1) both during operation in the harvesting configuration (K₁) and also during operation in the field-end configuration (K₂).

9. A combination according to one of the preceding claims **characterised in that** when the field-end situation (S₂) is detected the control device (10) automatically initiates one or more measures which can include in particular: predetermining a travel speed (v₂), lifting the pick-up (4), reducing the speed of rotation of the power take-off output shaft (24), stopping the drive of the material conveyor and/or processing member (4, 5, 6, 7), and unlocking a steering axle of the harvester (3) to bring the combination into the field-end configuration (K₂).

10. A combination according to one of the preceding claims **characterised in that** during operation in the field-end configuration (K₂) the control device (10) predetermines a travel speed (v₂) for the combination (1) which corresponds to a value which can be defined by an operator or a value which is ascertained in particularly means of the control device (10) based on the respective characteristic of a headland.

11. A combination according to one of the preceding claims **characterised in that** when the harvesting situation (S₁) is detected the control device (10) automatically initiates one or more measures which can include in particular: predetermining a travel speed (v₁), lowering the pick-up (4), increasing the speed of rotation of the power take-off output shaft (4), starting the drive of material conveyor and/or processing member (4, 5, 6, 7), and locking the steering axle of the harvester (3) to bring the combination (1) into the harvesting configuration (K₁).

12. A combination according to one of the preceding claims **characterised in that** during operation in the harvesting configuration (K₁) the control device (10) predetermines a travel speed (v₁) for the combination (1) which depends on continuously detected operating parameters of the harvester (3) and the towing vehicle (2).

13. A combination according to claim 12 **characterised in that** the travel speed (v₁) is so selected that the combination (1) achieves at least one harvesting aim which can be predetermined by the machine operator while ensuring safe operation.

14. A combination according to claim 12 or claim 13 **characterised in that** at least one value characterising the mechanical loading of one or more working assemblies (4, 5, 6, 7, 8) like in particular its speed, torque, working pressure and/or the like is taken into consideration as the operating parameter of the harvester (3); and/or a value related to the harvesting process like in particular the crop material moisture content, the crop material volume, the pressing density, the packet size, the throughput and/or the like is taken into consideration as the operating parameter of the harvester (3).

15. A combination according to one of claims 12 to 14 **characterised in that** the load of the drive engine (9) of the towing vehicle (2) and/or the currently prevailing transmission ratio of the travel drive of the towing vehicle (2) is taken into consideration as the operating parameter of the towing vehicle (2).

## Revendications

1. Combinaison (1) d'un véhicule de traction (2), en particulier d'un tracteur, et d'une machine agricole de récolte (3) tractée par celui-ci, en particulier d'une presse à balles ou d'une remorque autochargeuse, la combinaison (1) comprenant des moyens (10, 14, 16, 20, 21) pour déterminer si la machine de récolte (3) se trouve dans une situation de récolte (S₁) ou dans une situation de bout de champ (S₂), et un équipement de commande (10) qui est exploitable pour affecter à au moins un équipement fonctionnel (4, 5, 6, 7, 9, 17, 24) de la combinaison (1) au moins un réglage paramétrique avec lequel la combinaison (1) est exploitable en fonction de la situation déterminée (S₁, S₂) dans une configuration de récolte (K₁) ou dans une configuration de bout de champ (K₂), **caractérisée en ce qu'**à l'équipement de commande (10) est associé au moins un agencement de capteur (21) permettant de détecter au moins un état (z) de la combinaison (1), un angle de braquage (z1) du véhicule de traction (2), l'équipement de commande (10) déduisant d'au moins cet état (z1) si la machine de récolte (3) se trouve dans la situation de récolte (S1 ou dans la situation de bout de champ (S2).

2. Combinaison selon la revendication 1, **caractérisée en ce que** la détermination du fait que la machine de récolte (3) se trouve dans une situation de récolte (S₁) ou dans une situation de bout de champ (S₂) s'effectue en fonction d'un ou plusieurs critères d'exploitation de la combinaison (1).

3. Combinaison selon la revendication 1 ou 2, **caractérisée en ce qu'**à l'équipement de commande (10) est associé au moins un autre agencement de capteur (20, 14, 16) permettant de détecter au moins un état (z) de la combinaison (1), comme en particulier une position (z₂) de la machine de récolte (3) et/ou du véhicule de traction (2), un état de ramassage (z₃) de produit récolté par la machine de récolte (3), l'équipement de commande (10) déduisant d'au moins un de ces états (z₂, z₃) si la machine de récolte (3) se trouve dans la situation de récolte (S₁) ou dans la situation de bout de champ (S₂) .

4. Combinaison selon la revendication 3, **caractérisée en ce que** l'équipement de commande (10) ne détermine la situation (S₁, S₂) qu'en présence d'un état correspondant pendant une durée minimale prescriptible.

5. Combinaison selon la revendication 3 ou 4, **caractérisée en ce qu'**à un organe de convoyage et/ou de traitement de produit (4, 5, 6) de la machine de récolte (3) est associé un capteur de charge (16) qui sert à détecter l'état de ramassage (z₃) de produit récolté (18) par la machine de récolte (3).

6. Combinaison selon une des revendications 3 à 5, **caractérisée en ce que** la machine de récolte (3) et/ou le véhicule de traction dispose d'un détecteur de produit récolté (14) qui permet de détecter la présence de produit récolté (18) juste devant la machine de récolte (3), respectivement devant le véhicule de traction, afin d'en déduire une information sur un état à escompter de ramassage (z₃) de produit récolté (18) par la machine de récolte (3).

7. Combinaison selon une des revendications précédentes, **caractérisée en ce que** le réglage paramétrique concerne un réglage d'une des grandeurs suivantes : une vitesse de marche (v) de la combinaison (1), un angle de braquage (z₁) du véhicule de traction (2), un rapport de transmission du groupe propulseur du véhicule de traction (2), une vitesse de rotation de la sortie de prise de force (24) du véhicule de traction (2), un rapport de transmission de la sortie de prise de force (24), une position en hauteur du pick-up (4), un état d'entraînement du pick-up (4), du rotor (5), de l'ameneur (6) et/ou du piston de presse (7) de la machine de récolte (3).

8. Combinaison selon une des revendications précédentes, **caractérisée en ce qu'**aussi bien pendant l'exploitation dans la configuration de récolte (K₁) que pendant l'exploitation dans la configuration de bout de champ (K₂), l'équipement de commande (10) prescrit une vitesse de marche (v₁, v₂) pour la combinaison (1) .

9. Combinaison selon une des revendications précédentes, **caractérisée en ce que**, en cas de détermination de la situation de bout de champ (S₂), l'équipement de commande (10) prend automatiquement une ou plusieurs mesures au nombre desquelles peuvent en particulier compter : prescription d'une vitesse de marche (v₂), relevage du pick-up (4), réduction de la vitesse de rotation de la sortie de prise de force (24), arrêt de l'entraînement de l'organe de convoyage et/ou de traitement de produit (4, 5, 6, 7), déverrouillage d'un essieu directeur de la machine de récolte (3), afin d'amener la combinaison (1) dans la configuration de bout de champ (K₂).

10. Combinaison selon une des revendications précédentes, **caractérisé en ce que**, pendant l'exploitation dans la configuration de bout de champ (K₂), l'équipement de commande (10) prescrit, pour la combinaison (1), une vitesse de marche (v₂) qui correspond à une valeur définissable par un utilisateur ou à une valeur qui est déterminée en particulier au moyen de l'équipement de commande (10) sur la base, à chaque fois, de la caractéristique de la tournière.

11. Combinaison selon une des revendications précédentes, **caractérisée en ce que**, en cas de détermination de la situation de récolte (S₁), l'équipement de commande (10) prend automatiquement une ou plusieurs mesures au nombre desquelles peuvent en particulier compter : prescription d'une vitesse de marche (v₁), abaissement du pick-up (4), augmentation de la vitesse de rotation de la sortie de prise de force (24), mise en marche de l'organe de convoyage et/ou de traitement de produit (4, 5, 6, 7), verrouillage de l'essieu directeur de la machine de récolte (3), afin d'amener la combinaison (1) dans la configuration de récolte (K₁) .

12. Combinaison selon une des revendications précédentes, **caractérisée en ce que**, pendant l'exploitation dans la configuration de récolte (K₁), l'équipement de commande (10) prescrit, pour la combinaison (1), une vitesse de marche (v₁) qui dépend de paramètres d'exploitation détectés en continu de la machine de récolte (3) et du véhicule de traction (2).

13. Combinaison selon la revendication 12, **caractérisée en ce que** la vitesse de marche (v₁) est choisie de façon que la combinaison (1) atteigne au moins un but de récolte prescriptible par l'utilisateur de la machine tout en garantissant une exploitation sûre.

14. Combinaison selon la revendication 12 ou 13, **caractérisée en ce que**, comme paramètres d'exploitation de la machine de récolte (3), on prend en compte au moins une grandeur caractérisant la sollicitation mécanique d'un ou plusieurs ensembles de travail (4, 5, 6, 7, 8), comme en particulier leur vitesse, couple de rotation, pression de travail et/ou analogues ; et/ou **en ce qu'**on prend en compte une grandeur relative au processus de récolte comme en particulier l'humidité du produit récolté, le volume du produit récolté, la densité de balle, la densité de paquet, le débit et/ou analogues.

15. Combinaison selon une des revendications 12 à 14, **caractérisée en ce que**, comme paramètres d'exploitation du véhicule de traction (2), on prend en compte la charge de son moteur d'entraînement (9) et/ou le rapport de transmission instantané du groupe propulseur du véhicule de traction (2).
